# EUROPEAN PATENT APPLICATION

(11) **EP 4 386 297 A1**
(43) Date of publication of application: **19.06.2024**
(21) Application number: 22855209.7
(22) Date of filing: 21.07.2022
(51) Int. Cl.: F25D 25/02, F25D 23/00, F25D 11/00, F25B 21/00, A23B 4/06

(54) **MAGNETIC FIELD FRESHNESS-PRESERVING STORAGE CONTAINER AND REFRIGERATOR**

(30) Priority: 11.08.2021 CN 202110920436
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: ZHAO, Yanfeng, Qingdao, Shandong 266101 (CN); ZHU, Xiaobing, Qingdao, Shandong 266101 (CN); LI, Mengcheng, Qingdao, Shandong 266101 (CN); FEI, Bin, Qingdao, Shandong 266101 (CN); ZHANG, Yuning, Qingdao, Shandong 266101 (CN); YI, Yao, Qingdao, Shandong 266101 (CN); JI, Lisheng, Qingdao, Shandong 266101 (CN); CAO, Zilin, Qingdao, Shandong 266101 (CN); LI, Tao, Qingdao, Shandong 266101 (CN)
(74) Representative: Winter, Brandl - Partnerschaft mbB
(86) International application number: PCT/CN2022/107161
(87) International publication number: WO 2023/016226

(57) **Abstract**

A magnetic field freshness-preserving storage container (200) and a refrigerator (10). The magnetic field freshness-preserving storage container (200) comprises: a storage box (210), in which a storage space (212) for holding stored objects is defined; two uniform magnetization plates (221), which are made of a magnetically conductive material and are respectively arranged corresponding to a set of side walls of the storage box (210) that are correspondingly arranged opposite each other; and two sets of electromagnetic components (222). Each set of electromagnetic components (222) is arranged corresponding to one uniform magnetization plate (221) and forms an electromagnetic field after being electrified, and the magnetic field distribution of the electromagnetic field can be changed by means of the uniform magnetization plates (221), such that the electromagnetic field is distributed more uniformly in the storage space (212). Since the electromagnetic field is distributed more uniformly in the storage space (212), stored objects can have the same storage quality. In addition, the uniform magnetization plates (221) can save on the consumption of magnetic materials. The refrigerator (10) provides a new freshness preservation function, which meets the increasing demand of users for using smart refrigerators, and further meets the quality requirements of users for smart homes and smart life.

## Description

### TECHNICAL FIELD

The present invention relates to refrigerating and freezing devices, and in particular to a magnetic field freshness-preserving storage container and a refrigerator.

### BACKGROUND ART

Users are now paying more and more attention to a freshness-preservation effect of objects stored in refrigerators. In the process of storage, meat, fish, shrimps and other food varieties are prone to loss of juice, resulting in taste deterioration and color darkening. In particular, the quality of some high-grade food varieties may be greatly reduced after storage for a period of time.

In order to improve the storage quality, many improvement schemes have emerged in the prior art, but some of the freshness-preservation storage effects are not satisfactory enough, and some of them are high in cost of implementation and thus not convenient for household refrigerators. In the above improvement schemes, theoretical studies have found that a magnetic field has a great impact on the formation of ice crystals in the process of freezing. In the field of refrigerators, active explorations are now being made to introduction of a magnetic field into freshness-preservation storage. However, a magnetic field, when actually applied to a refrigerator, is non-uniformly distributed in a storage space, and the intensity of the magnetic field has a great impact on a freshness-preservation effect. As a result, the non-uniform distribution of the magnetic field in the freshness-preservation space makes it difficult to guarantee the storage quality of stored objects.

### SUMMARY OF THE INVENTION

An objective of the present invention is to provide a magnetic field freshness-preserving storage container and a refrigerator, which can effectively improve the storage quality.

A further objective of the present invention is to make a magnetic field inside a storage space more uniform.

Another further objective of the present invention is to reduce the cost of components.

In particular, the present invention is directed to a magnetic field freshness-preserving storage container, comprising:
a storage box with a storage space defined therein for holding a stored object;
two uniform magnetization plates made of a magnetically conductive material and respectively arranged corresponding to a set of opposite side walls of the storage box; and
two sets of electromagnetic assemblies, wherein each set of electromagnetic assemblies is arranged corresponding to one uniform magnetization plate and forms an electromagnetic field after being electrified, and field distribution of the electromagnetic field is changed by using the uniform magnetization plates, so that the electromagnetic field is distributed more uniformly in the storage space.

Further, one or more lug bosses is/are arranged on a side of each of the uniform magnetization plates facing the storage box; and
each set of electromagnetic assemblies comprises one or more electromagnetic loops, and each electromagnetic loop with an electromagnetic coil wound therein along an annular circumferential axis sleeves one of the lug bosses.

Further, a shape of the uniform magnetization plate is adapted to a shape of a side wall of the storage box where the uniform magnetization plate is located, and a projection of the storage space onto a plane where the uniform magnetization plate is located lies within a peripheral contour range of the uniform magnetization plate.

Further, each of the uniform magnetization plates is provided with one of the lug bosses, and the lug boss is located in a central area of the uniform magnetization plate, so that a center of the electromagnetic loop sleeving the lug boss is substantially opposite to a center of the uniform magnetization plate.

Further, the plurality of lug bosses is arranged at intervals on each of the uniform magnetization plates, and one of the electromagnetic loops sleeves each of the lug bosses.

Further, each of the uniform magnetization plates covers a part of a side wall of the storage box where the uniform magnetization plate is located, has a center opposite to a center of the side wall, and has a protrusion arranged on a side facing the storage box; and
each set of electromagnetic assemblies comprises an electromagnetic loop, and a part of an inner peripheral wall of the electromagnetic loop abuts against the protrusion.

Further, the magnetic field freshness-preserving storage container further comprises:
magnetically conductive connecting bands, connected to two sides of the two uniform magnetization plates and forming an annular magnetically conductive path together with the two uniform magnetization plates outside the storage space.

Further, the magnetic field freshness-preserving storage container further comprises:
a barrel with a forward opening, wherein
the storage box is a drawer arranged in the barrel in a drawable manner, and the two uniform magnetization plates are respectively arranged at the top and the bottom of the storage box.

Further, the uniform magnetization plates are arranged on an outer side or an inner side of the barrel, and a minimum spacing between the electromagnetic component and an area in which a stored object is placed inside the storage space is set to be greater than 1 mm.

The present invention is also directed to a refrigerator, comprising:
a box body with a storage compartment defined therein; and
the magnetic field freshness-preserving storage container arranged inside the storage compartment.

According to the magnetic field freshness-preserving storage container of the present invention, two uniform magnetization plates and two sets of electromagnetic assemblies are respectively arranged corresponding to a set of opposite side walls of a storage box, and the uniform magnetization plates are made of a magnetically conductive material and thus can change the field distribution of an electromagnetic field formed by the electromagnetic assemblies, so that the electromagnetic field is distributed more uniformly inside a storage space. The magnetic field helps to improve the storage quality, and can shorten the freezing time, reduce a loss rate of juice and nutrient loss of food, reduce the number of microorganisms and bacteria, and extend a freshness-preservation cycle. Since the magnetic field is more uniform, objects stored may have a uniform storage quality. Meanwhile, the uniform magnetization plates can reduce the consumption of a magnetic material, avoiding cost increase and weight increase caused by using too many or too large magnetic parts.

Further, according to the magnetic field freshness-preserving storage container of the present invention, a lug boss is arranged on a side of the uniform magnetization plate facing the storage box. The lug boss, in one aspect, can limit the electromagnetic component, and in another aspect, facilitates convergence of the magnetic field into the uniform magnetization plate, thereby improving the utilization efficiency of the magnetic field.

Furthermore, according to the magnetic field freshness-preserving storage container of the present invention, by optimizing the structures of the uniform magnetization plates and the electromagnetic assemblies, the magnetic field freshness-preserving storage container is made more compact in structure, and is particularly more applicable to such structures as storage boxes and storage drawers, so as to realize magnetic-field freshness-preservation inside a relatively flat storage space.

Furthermore, the refrigerator of the present invention is provided with the magnetic field freshness-preserving storage container described above, so that food varieties are stored in a magnetic-field environment, the growth of ice crystal nuclei is inhibited, a growth rate of ice crystals is higher than a migration rate of water molecules, and the generated ice crystals are smaller, thus reducing damages to cells, avoiding loss of juice, ensuring better taste of the food varieties, improving the quality of freezing storage, and meeting users' requirements for the storage quality of precious food varieties.

Furthermore, according to the refrigerator of the present invention, the storage quality is improved by means of the magnetic field, so that a new freshness-preservation function can be provided for the intelligent refrigerator, which meets the users' increasing demands for the use of the intelligent refrigerator, and further meets the users' requirements for the quality of smart home and smart life.

The above and other objects, advantages and features of the present invention will become more apparent to those skilled in the art from the following detailed description of specific embodiments thereof taken in conjunction with the accompanying drawings.

### BRIEF DESCRIPTION OF THE DRAWINGS

Some specific embodiments of the invention will be described in detail hereinafter by way of example and not by way of limitation with reference to the accompanying drawings. The same reference numerals identify the same or similar components or parts in the drawings. Those skilled in the art should appreciate that the drawings are not necessarily drawn to scale. In the drawings:
FIG. 1 is a schematic perspective view of a refrigerator having a magnetic field freshness-preserving storage container according to an embodiment of the present invention;
FIG. 2 is a schematic diagram of a magnetic field freshness-preserving storage container of a drawer structure according to an embodiment of the present invention;
FIG. 3 is a schematic diagram of a magnetic field freshness-preserving storage container according to an embodiment of the present invention;
FIG. 4 is an exploded view of components of the magnetic field freshness-preserving storage container shown in FIG. 3;
FIG. 5 is an exploded view of components of a magnetic field freshness-preserving storage container according to another embodiment of the present invention;
FIG. 6 is a schematic diagram of a magnetic field freshness-preserving storage container according to yet another embodiment of the present invention;
FIG. 7 is an exploded view of components of a magnetic field freshness-preserving storage container shown in FIG. 8;
FIG. 8 is a schematic diagram of the magnetic field freshness-preserving storage container having a magnetically conductive connecting band according to an embodiment of the present invention;
FIG. 9 is a schematic diagram of a magnetic field freshness-preserving storage container having a magnetically conductive connecting band according to another embodiment of the present invention;
FIG. 10 is a schematic diagram of a magnetic field freshness-preserving storage container having a drawer structure according to another embodiment of the present invention; and
FIG. 11 is a block diagram of a control system of a refrigerator having a magnetic field freshness-preserving storage container according to an embodiment of the present invention.

### DETAILED DESCRIPTION

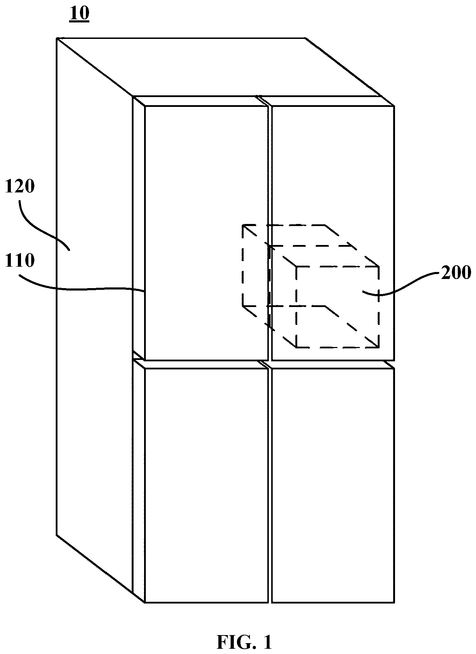

FIG. 1 is a schematic perspective view of a refrigerator 10 having a magnetic field freshness-preserving storage container 200 according to an embodiment of the present invention. In this embodiment, the refrigerator 10 may generally include a box body 120, a door body 110, and a refrigerating system (not shown). At least one storage compartment with an open front side may be defined in the box body 120, and there is usually a plurality of storage compartments, such as a refrigerating storage compartment, a freezing storage compartment and a variable-temperature storage compartment. The specific number and functions of the storage compartments may be configured according to prior demands.

In this embodiment, the refrigerator 10 may be an air-cooled refrigerator, with an air duct system provided in the box body 120, and refrigerating airflow which has been heat-exchanged by a heat exchanger (evaporator) is delivered by using a fan to the storage compartments through an air supply outlet, and then returned to an air duct through an air return outlet, so as to realize refrigeration. Since the box body 120, the door body 110 and the refrigerating system of such a refrigerator are all well-known and readily implemented by those skilled in the art, in order not to obscure and blur the points of invention of the present application. The box body 120, the door body 110 or the refrigerating system itself will not be described in detail hereinafter.

The magnetic field freshness-preserving storage container 200 may be arranged inside one or more storage compartments of the refrigerator 10. When placed in the freezing storage compartment, the magnetic field freshness-preserving storage container 200 may be used to freeze and keep frozen food fresh, and inhibit the growth of ice crystal nuclei, so that a growth rate of ice crystals is higher than a migration rate of water molecules, and the generated ice crystals are smaller, thereby reducing damages to cells, avoiding loss of juice, accelerating the freezing process and shortening the freezing time. When placed in the refrigerating storage compartment, the magnetic field freshness-preserving storage container 200 may reduce the speed of redox reaction of food varieties, reduce loss of nutrients and water, prevent the food varieties from discoloration, inhibit the growth of bacteria, and extend a freshness-preservation cycle of the food varieties.

The number of the magnetic field freshness-preserving storage containers 200 and the storage compartments for their arrangement may be configured according to users' needs. For example, one or more magnetic field freshness-preserving storage containers 200 may be arranged inside the refrigerator 10. The magnetic field freshness-preserving storage container 200 may be arranged in the refrigerating storage compartment, the freezing storage compartment or the variable-temperature storage compartment, where magnetic field-assisted freshness-preservation is performed. The magnetic field freshness-preserving storage container 200 may also be used as an independent compartment of the refrigerator 10, with its temperature independently controlled by the refrigerator 10.

The magnetic field freshness-preserving storage container 200 may include a storage box 210. A storage space 212 for holding a stored object is defined in the storage box 210, and the storage box 210 may be box-shaped. In some embodiments, the storage box 210 may be in an overall flat cuboid shape (i.e., a distance in a height direction is significantly less than a distance in a depth direction and a distance in a lateral left-right direction). The structure and the dimension of the storage box 210 may be configured by those skilled in the art according to the required storage space, and the storage box may be configured into a case shape and a box shape and may be used for implementing a drawer structure in some embodiments.

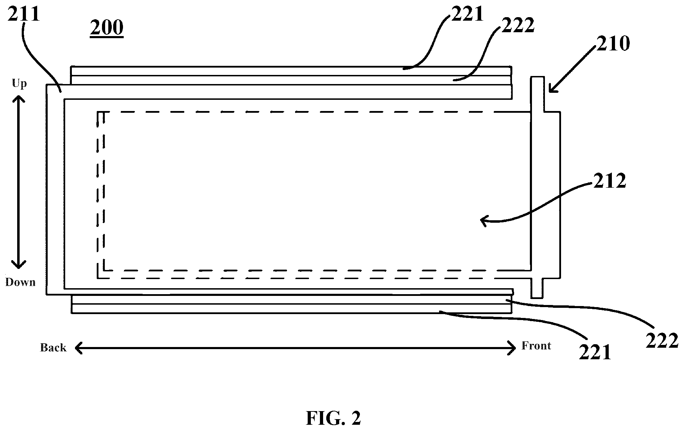

FIG. 2 is a schematic diagram of a magnetic field freshness-preserving storage container 200 having a drawer structure according to an embodiment of the present invention. The storage box 210 may be of a drawer structure, i.e., the magnetic field freshness-preserving storage container 200 may further include a barrel 211. The barrel 211 has a forward opening. The storage box 210 is arranged in the barrel 211 in a drawable manner. The storage space 212 may be exposed after the storage box 210 is pulled out, so that stored objects can be picked and placed. An independent sealed space may be formed after the storage box 210 is pushed into the barrel 211. The structure of the drawer itself for the refrigerator is well known by those skilled in the art, and thus will not be repeated herein.

Two uniform magnetization plates 221 of the magnetic field freshness-preserving storage container 200 are made of a magnetically conductive material and are respectively arranged corresponding to a set of opposite side walls of the storage box 210. The uniform magnetization plates 221 may be made of a material with low coercivity and high magnetic conductivity, and for example, may be made of a silicon steel sheet or the like. The opposite sides where the uniform magnetization plates 221 are located may be selected according to the shape of the storage box 210 and the structure of the storage space 212. For example, the uniform magnetization plates may be selectively placed on two lateral sides, top and bottom sides, or front and rear sides of the storage box 210. That is, the two uniform magnetization plates 221 may be located on the left and right sides, the top and bottom sides, or the front and rear sides of the storage box 210.

In the case that the storage box 210 is flat on the whole, in particular that the storage box 210 is in the form of a drawer, the two uniform magnetization plates 221 may be preferentially arranged on the top and bottom sides of the storage box 210. A magnetic field formed by the magnetic field freshness-preserving storage container 200 runs through the storage space 212 from top to bottom or from bottom to top.

The magnetic field freshness-preserving storage container 200 is provided with two sets of electromagnetic assemblies 222. Each set of electromagnetic assemblies 222 is arranged corresponding to one uniform magnetization plate 221, and forms an electromagnetic field after being electrified. The field distribution of the electromagnetic field is changed by using the uniform magnetization plate 221, so that the electromagnetic field is distributed more uniformly in the storage space 212. In the case that the two uniform magnetization plates 221 may be preferentially arranged on the top and bottom sides of the storage box 210, the two sets of electromagnetic assemblies 222 are correspondingly arranged on the top and bottom sides of the storage box 210. In an embodiment where the uniform magnetization plates are arranged on other opposite side walls of the storage box, the two sets of electromagnetic assemblies 222 and the uniform magnetization plates may be arranged on the corresponding side walls.

A range of magnetic field intensity that meets the requirements of freshness-preservation may be set to 1 Gs to 100 Gs. In the case of application in a freezing environment, the range of magnetic field intensity may be preferably 5 GS to 60 GS, for example, about 20 Gs. In the case of application in a refrigerating environment, the range of magnetic field intensity may be 20 Gs to 160 Gs, preferably from 40 Gs to 80 Gs, for example, about 60 Gs. That is, the uniform magnetization plates 221 and the electromagnetic assemblies 222 may form a full-coverage freshness-preservation magnetic field within the above-mentioned range of magnetic field intensity in the storage space.

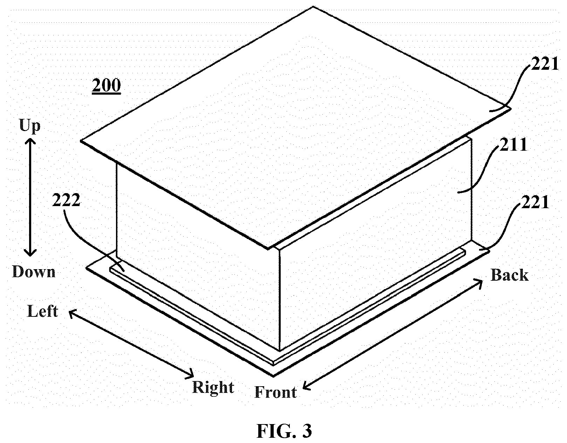

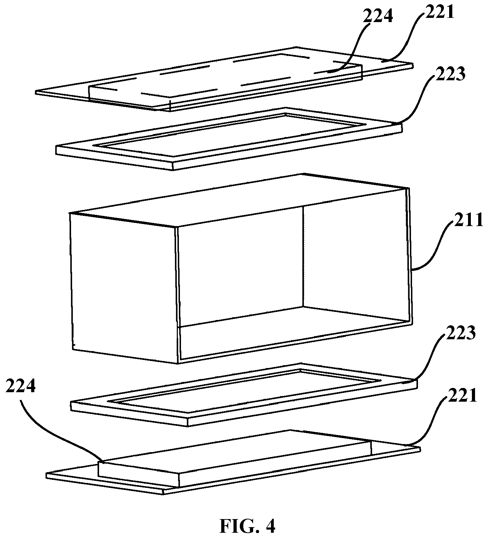

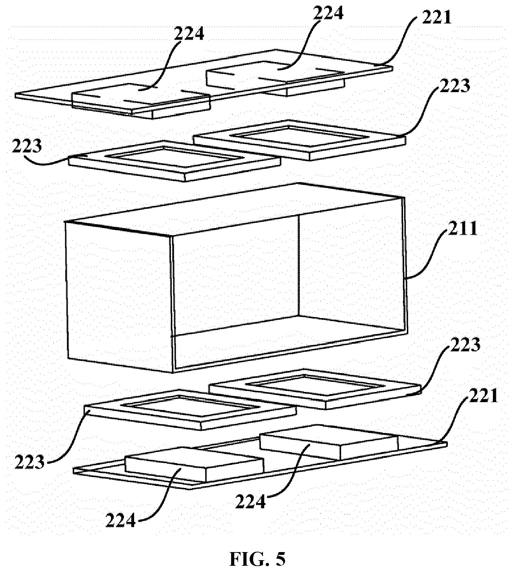

FIG. 3 is a schematic diagram of a magnetic field freshness-preserving storage container 200 according to an embodiment of the present invention; and FIG. 4 is an exploded view of components of the magnetic field freshness-preserving storage container 200 shown in FIG. 3. In order to show a matching relationship between the uniform magnetization plates 221 and an electromagnetic loop 223, the storage box 210 is omitted in FIG. 5, and only the barrel 211 for holding the storage box 210 is shown. The shape of the uniform magnetization plate 221 is adapted to the shape of a side wall of the barrel 211 where the uniform magnetization plate is located, and a projection of the storage space onto a plane where the uniform magnetization plate is located may lie within a peripheral contour range of the uniform magnetization plate. That is, the dimension of the uniform magnetization plate 221 may be equal to or slightly larger than that of the corresponding side of the storage box 210. In the case that the uniform magnetization plates 221 are arranged at the top and the bottom of the barrel 211, the uniform magnetization plate 221 at the top may cover the top surface of the storage space 212, and the uniform magnetization plate 221 at the bottom may cover the bottom surface of the storage space 212. The uniform magnetization plates 221 enable no-dead-angle coverage of the magnetic field inside the storage box 210.

One or more lug bosses 224 is/are arranged on a side of each uniform magnetization plate 221 facing the storage box 210. Each set of electromagnetic assemblies 222 includes one or more electromagnetic loops 223. Each electromagnetic loop 223 with an electromagnetic coil wound inside along an annular circumferential axis sleeves one of the lug bosses 224. As shown in FIGs. 3 and 4, the uniform magnetization plate 221 at the top is provided with a downward lug boss 224, and the uniform magnetization plate 221 at the bottom is provided with an upward lug boss 224. Each magnet homogenizing plate 221 is provided with one lug boss 224, and the lug boss 224 is located in a central area of the magnet homogenizing plate 221.

The electromagnetic coil is wound inside the electromagnetic loop 223 in an annular circumferential direction, and after being electrified, makes an electromagnetic field be formed in the storage space 212. By controlling the electromagnetic coil, the electromagnetic field may be set as a static magnetic field with a constant magnetic field direction and/or magnetic field intensity, an alternating magnetic field with an alternating magnetic field direction and/or magnetic field intensity, and a pulsed magnetic field activated at time intervals, as desired. The above-mentioned magnetic-field adjustment may be realized by adjusting a current supplied to the electromagnetic coil. In some embodiments, the electromagnetic field may be adjusted according to a storage environment inside the storage space 212 and a storage state of the stored object. In other embodiments, the electromagnetic field may also be a constant magnetic field with constant magnetic field intensity.

The electromagnetic loop 223 may be formed into a flat annular shape, of which the top and the bottom of two end faces (a top surface or a bottom surface) are planar, and the thickness is obviously smaller than a peripheral dimension. A width-to-thickness ratio of the electromagnetic loop 223 may be set to 1 to 10. The electromagnetic loop 223 is provided with an electromagnetic coil, which has a corresponding waterproof structure, for example, the inside is wrapped and protected by means of dip coating, molding, a seal ring or a sealing shell, and the whole electromagnetic loop is constructed into a flat annular shape. The electromagnetic loop 223 with the above structure may match the uniform magnetization plate 221 more conveniently and thus occupy a smaller space. The electromagnetic loop 223 with an electromagnetic coil wound inside along an annular circumferential axis sleeves one lug boss 224. A contour of the lug boss 224 may be adapted to the shape of an inner peripheral through hole of the electromagnetic loop 223, so that the electromagnetic loop 223 may be conveniently installed on the lug boss 224. In addition, the lug boss 224 may also guide the magnetic field of the electromagnetic loop 223 into the uniform magnetization plates 221, and the field distribution of the electromagnetic field may be changed by using the uniform magnetization plates 221.

The number of turns of the electromagnetic coil inside the electromagnetic loop 223 may be set according to the required magnetic field intensity. The electromagnetic field formed by the electromagnetic loop 223 is perpendicular to the side wall of the storage box 210, and the pole directions of the electromagnetic loops 223 on the opposite side walls are set to be consistent, so that the storage space forms a penetrating magnetic field. That is, N poles of the two electromagnetic loops 223 are in the same direction, while S poles are in opposite directions. For example, a field direction may be from top to bottom or from bottom to top. Based on the same technical idea, it is easy for those skilled in the art to implement magnetic fields in an opposite direction.

The lug boss 224 is located in a central area of the uniform magnetization plate 221, so that the center of the electromagnetic loop 223 sleeving the lug boss 224 may be substantially opposite to the center of the uniform magnetization plate 221. The lug boss 224, in one aspect, can limit the electromagnetic loop 223, and in another aspect, can facilitate convergence of the magnetic field into the uniform magnetization plate 221, improving the utilization efficiency of the magnetic field.

A protruding height of the lug boss 224 may be approximately the same as or slightly smaller than the thickness of the electromagnetic loop 223, so that the uniform magnetization plates 221 and the electromagnetic loops 223 may match the storage box 210 (or the barrel 211).

The uniform magnetization plate 221 expands a magnetic field range of the electromagnetic loop 223 and makes the electromagnetic field more uniform. The electromagnetic loops 223 and the uniform magnetization plates 221 are concentrically arranged. The dimension of the uniform magnetization plate 221 may be larger than a peripheral contour of the electromagnetic loop 223, thereby expanding the coverage of the electromagnetic field.

FIG. 5 is an exploded view of components of a magnetic field freshness-preserving storage container 200 according to another embodiment of the present invention. In order to show a matching relationship between the uniform magnetization plates 221 and the electromagnetic loops 223, the storage box 210 is omitted in FIG. 5, and only the barrel 211 for holding the storage box 210 is shown. In the magnetic field freshness-preserving storage container 200 according to this embodiment, the two uniform magnetization plates 221 of the magnetic field freshness-preserving storage container 200 are also respectively arranged corresponding to a set of opposite side walls of the storage box 210, and may be selectively placed on two lateral sides, the top and bottom sides, or the front and rear sides of the barrel 211. The dimension of the uniform magnetization plate 221 may be equal to or slightly larger than that of the corresponding side of the storage box 210. In the case that the uniform magnetization plates 221 are arranged at the top and the bottom of the barrel 211, the uniform magnetization plate 221 at the top may cover the top surface of the storage space 212; and the uniform magnetization plate 221 at the bottom may cover the bottom surface of the storage space 212. The uniform magnetization plates 221 enable no-dead-angle coverage of the magnetic field inside the storage space 212.

Each uniform magnetization plate 221 is provided with a plurality of lug bosses 224 spaced apart, and an electromagnetic loop 223 sleeves each lug boss 224. The lug bosses 224 may be evenly distributed on each uniform magnetization plate 221. For example, two or four lug bosses 224 of the same size may be arranged on the uniform magnetization plate 221, and each lug boss 224 is sleeved with one electromagnetic loop 223. The distribution of the magnetic field can be dispersed by a plurality of electromagnetic coils 223, which further improves the uniformity of the magnetic field.

The number of the lug bosses 224 and the electromagnetic loops 223 may be configured according to the size of the storage space 212. For example, for the storage box 210 with a large storage space 212, the uniform magnetization plate 221 may be provided with a plurality of lug bosses 224 to match a plurality of electromagnetic loops 223. For the storage box 210 with a small storage space 212, the uniform magnetization plate may be provided with one lug boss 224 to match one electromagnetic loop 223.

The combinations of the uniform magnetization plates 221 and the electromagnetic loops 223 on the two sides may have substantially the same structure, thereby forming a penetrating magnetic field in the storage space 212. According to the embodiment shown in FIG. 5, the uniform magnetization plates 221 at the top and the bottom of the storage box 210 are each provided with two lug bosses 224, and two electromagnetic loops 223 are respectively arranged at the top and the bottom of the storage box 210 respectively to match the two lug bosses 224. On the basis of this structure, it is easy for those skilled in the art to implement match of more lug bosses 224 and electromagnetic loops 223.

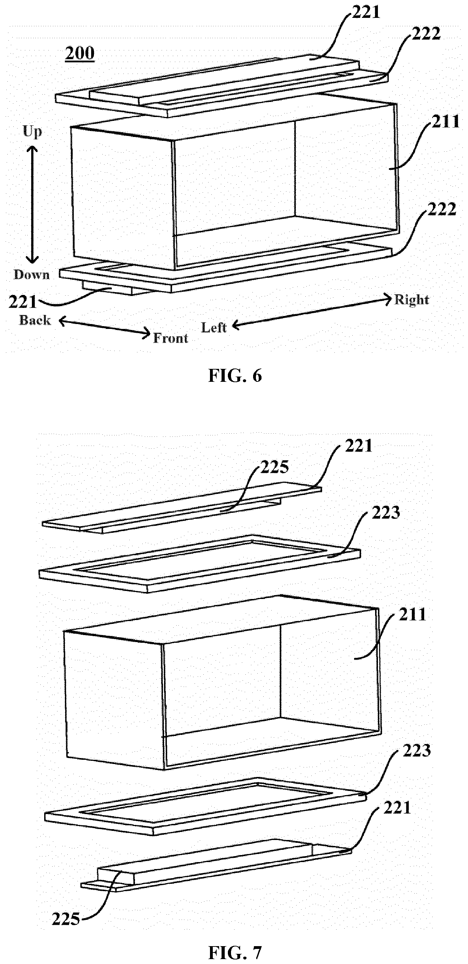

FIG. 6 is a schematic diagram of a magnetic field freshness-preserving storage container 200 according to another embodiment of the present invention; and FIG. 7 is an exploded view of components of the magnetic field freshness-preserving storage container 200 shown in FIG. 6. In order to show a matching relationship between the uniform magnetization plates 221 and the electromagnetic loops 223, the storage box 210 is omitted in FIGs. 6 and 7, and only the barrel 211 for holding the storage box 210 is shown. According to this embodiment, the dimension of the uniform magnetization plate 221 and the weight of the magnetic field freshness-preserving storage container 200 are further reduced. The uniform magnetization plates 221 are respectively arranged corresponding to a set of opposite side walls of the storage box 210 (or the barrel 211), and each uniform magnetization plate 221 covers a part of the side wall of the storage box 210 (or the barrel 211) where the uniform magnetization plate is located, has a center opposite to a center of the side wall, and has a protrusion 225 arranged on the side facing the storage box 210. Each set of electromagnetic assemblies 222 includes an electromagnetic loop 223, and a part of the inner peripheral wall of the electromagnetic loop 223 abuts against the protrusion 225. A projection of the uniform magnetization plate 221 onto a plane where the corresponding side wall of the storage box 210 is located can be located in a middle area of the storage box 210. For example, for the uniform magnetization plates 221 arranged at the top and the bottom of the barrel 211, the uniform magnetization plates 221 can be located in the middle of a front-back direction above the barrel 211 and in the middle of the front-back direction below.

The inner peripheral wall of the electromagnetic loop 223 may match the protrusion 225 of the uniform magnetization plate 221 by using a middle section. The distribution of the electromagnetic field is changed by using the uniform magnetization plates 221.

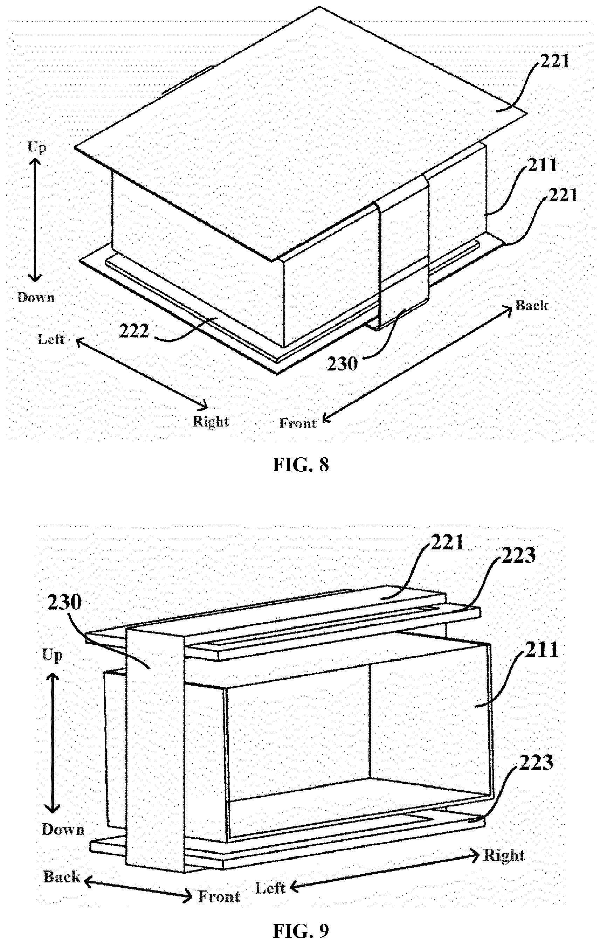

FIG. 8 is a schematic diagram of a magnetic field freshness-preserving storage container 200 having a magnetically conductive connecting band 230 according to an embodiment of the present invention. The magnetic field freshness-preserving storage container 200 can further include the magnetically conductive connecting band 230, which is connected to two sides of the two uniform magnetization plates 221 and form an annular magnetically conductive path together with the two uniform magnetization plates 221 outside the storage space 212. The magnetically connective band 230 connects the uniform magnetization plates 221 into an annular magnetically conductive path outside the storage space 212. The magnetically conductive connecting band 230 may be made of the same material as the uniform magnetization plates 221, and the formed magnetically conductive path may be used for converging the magnetic field to improve the uniformity of the magnetic field in the storage space 212 and reduce release of the magnetic field to the outside, thus reducing interference to other components outside the magnetic field freshness-preserving storage container 200 (for example, avoiding magnetizing other components).

The magnetically conductive connecting band 230 and the uniform magnetization plates 221 may be a one-piece part, i.e., integrally formed by the same material. In other embodiments, the magnetically conductive connecting band 230 and the uniform magnetization plate 221 can also be spliced to form an annular magnetically conductive path.

According to the embodiment in which the uniform magnetization plates 221 and the electromagnetic loops 223 are arranged at the top and the bottom of the storage box 210 (or the barrel 211) respectively, a part of the magnetically conductive connecting band 230 can extend from the middle of one lateral side (e.g., the right side) of the uniform magnetization plate 221 at the top along one side wall of the storage space to the middle of the corresponding side (e.g., the right side) of the uniform magnetization plate 221 at the bottom; and the other part of the magnetically conductive connecting band 230 extends from the middle of the other lateral side (for example, the left side) of the uniform magnetization plate 221 at the top along the other lateral side wall of the storage space 212 to the middle of the other lateral side (for example, the left side) of the uniform magnetization plate 221 at the bottom.

The magnetically conductive connecting band 230 can be strip-shaped, and has a width in a front-back depth direction that is one half to one tenth of the length of the uniform magnetization plate 221 in the front-back depth direction. That is, the magnetically conductive connecting band 230 can be arranged in the middle of the uniform magnetization plate 221 in the front-back direction, and is obviously narrower than the uniform magnetization plate 221. Owing to the structures of the magnetically conductive connecting band 230 and the uniform magnetization plates 221, the consumption of the magnetically conductive material and magnetic components can be reduced, the cost of the magnetic field freshness-preserving storage container 200 can be lowered, and the weights of the magnetic field freshness-preserving storage container 200 and the refrigerator 10 can be reduced.

FIG. 9 is a schematic diagram of a magnetic field freshness-preserving storage container 200 having a magnetically conductive connecting band 230 according to another embodiment of the present invention. The uniform magnetization plates 221 cover the middle area of the side wall of the storage box 210, and has the center opposite to the center of the side wall. The magnetically conductive connecting band 230 is connected from an end portion of the uniform magnetization plate 221 to the uniform magnetization plate 221 on the other side along the outer side of the barrel 211, thus forming an annular magnetically conductive path. The magnetically conductive connecting band 230 and the uniform magnetization plate 221 are located in the center of the barrel 211 in the front-back depth direction, so that the magnetically conductive path is formed on the outer side of the storage space 212 to avoid leakage of the magnetic field to the outside.

In the case that the magnetic field freshness-preserving storage container 200 is of a drawer structure, the uniform magnetization plate 221 may be arranged on the outer side of the barrel 211. For example, the uniform magnetization plates 221 and the electromagnetic assemblies 222 are arranged above the top surface of the barrel 211 and below the bottom surface of the barrel 211. Considering that the electromagnetic component 222 may produce heat when powered up to generate a magnetic field, a distance between the electromagnetic component 222 and an object stored in the storage space may be set to not less than 1 mm. The uniform magnetization plates 221 and the electromagnetic assemblies 222 may be arranged on the outer side of the barrel 211, which can reduce the impact of the electromagnetic assemblies 222 on a storage temperature of the object stored in the storage space 212, and is beneficial to heat dissipation of the electromagnetic assemblies 222 by the refrigerating airflow.

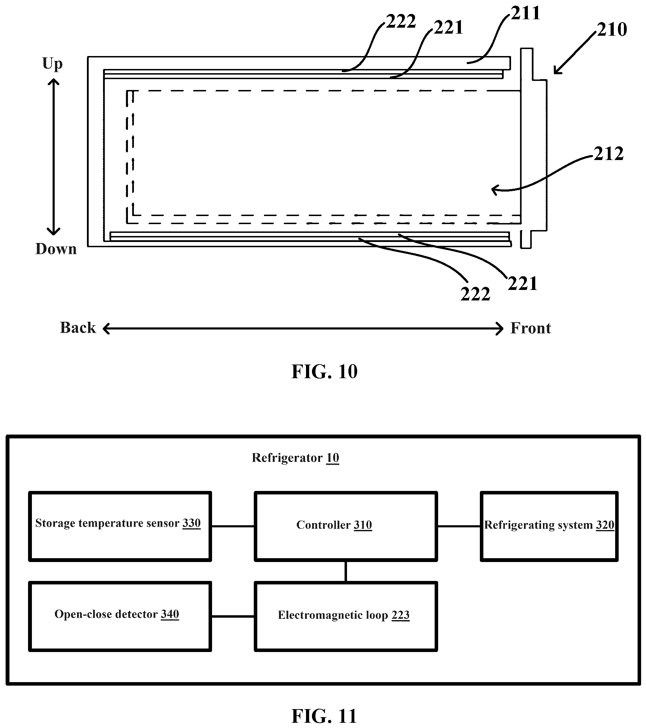

FIG. 10 is a schematic diagram of a magnetic field freshness-preserving storage container 200 having a drawer structure according to another embodiment of the present invention. In this embodiment, the magnetic field freshness-preserving storage container 200 is of a drawer structure, and the uniform magnetization plates 221 and the electromagnetic assemblies 222 are arranged inside the barrel 211, i.e., the uniform magnetization plates 221 and the electromagnetic loops 223 are arranged on the inner sides of the top surface and the bottom surface of the barrel 211. A structure for providing the uniform magnetization plates 221 and the electromagnetic assemblies 222 may be arranged on an inner surface of the barrel 211. The electromagnetic component 222 of this structure is closer to the stored object, which helps the magnetic field to take a magnetic field effect on the stored object. Considering that the electromagnetic component 222 may produce heat when powered up to generate a magnetic field, the distance between the electromagnetic loop 223 and the object stored in the storage space 212 may be set to not less than 1 mm. That is, a gap of not less than 1 mm is reserved between the electromagnetic loop 223 and the stored object.

FIG. 11 is a block diagram of a control system of a refrigerator 10 having a magnetic field freshness-preserving storage container 200 according to an embodiment of the present invention. According to this embodiment, the refrigerator 10 may also combine magnetic field control with refrigeration control to ensure that food is frozen in a magnetic field environment, thus achieving effects of freshness-preservation and freezing.

The refrigerator 10 may also be selectively provided with one or more of a storage temperature sensor 330, an open-close detector 340 and a refrigerating controller 310. The storage temperature sensor 330 is used for detecting a storage temperature inside the storage space 212, and the open-close detector 340 is used for detecting an open-close state of the storage space 212.

After the open-close detector 340 detects that the storage space 212 is opened, the storage temperature sensor 330 may detect whether new food varieties are placed in or whether the original food varieties need to be re-frozen. In the process of refrigeration, the electromagnetic loop 223 and the refrigerating system 320 work together to realize magnetic field-assisted freezing and improve freezing and freshness-preservation effects of the food varieties.

The controller 310 is used for controlling the electromagnetic loop 223 and the refrigerating system 320, so as to realize the corresponding refrigeration and magnetic field control. Various sensors (including the storage temperature sensor 330 and the open-close detector 340) provide detection means for the above control, so as to meet control requirements of the control method.

The controller 310 may be configured to control the electromagnetic loop 223 to generate an electromagnetic field according to a temperature of the storage space and an operating state of the refrigerator 10, such as a static magnetic field with a constant magnetic field direction and/or magnetic field intensity, an alternating magnetic field with an alternating magnetic field direction and/or magnetic field intensity, and a pulsed magnetic field activated at time intervals. Considering that the magnetic field is more useful in a specific storage stage of the stored object, the controller 310 may activate the electromagnetic field when a stronger magnetic field is needed. During normal storage, a basic magnetic field intensity is maintained by using the static magnetic field.

For example, when the magnetic field is utilized to assist in freezing storage, the controller 310 may be configured to activate the electromagnetic field when a new stored object is placed into the storage space 212 and the storage temperature lies within a set temperature threshold range. The above-mentioned temperature threshold range may be set according to a temperature during crystallization in the process of freezing, so as to increase the magnetic field intensity in the process of completing crystallization. The above-mentioned control method can freeze the object stored in a strong magnetic field environment, preferably inhibit the growth of ice crystal nuclei, reduce damages to cells, avoid loss of juice, ensure better taste of the food varieties, improve the quality of freezing storage, and meet users' requirements for the quality of storage of preci ous food varieties.

It should be understood that directional or positional relationships indicated by the terms such as "center", "longitudinal", "transverse", "length", "width", "thickness", "upper", "lower", "front", "rear", "left", "right", "vertical", "horizontal", "top", "bottom", "inner" and "outer" in the description of the embodiments are directional or positional relationships shown in the drawings, are only for the purposes of the ease in describing the present invention and simplification of its descriptions, but not for indicating or implying that the specified apparatus or element has to be located in a specific direction, and structured and operated in a specific direction. Therefore, these directional or positional relationships should not be understood as limitations to the present invention.

The terms such as "first" and "second" are merely for a descriptive purpose, and cannot be understood as indicating or implying relative importance, or implicitly indicating the number of the indicated technical features. Hence, the features defined by "first" or "second" can explicitly or implicitly include one or more features. In the description of the present invention, "a plurality of' means two or more in number, such as two or three, unless otherwise stated. When a feature "includes or comprises" some features, such indication does not exclude the inclusion of other features unless specifically stated otherwise.

Unless otherwise specified and limited, the terms "mounted", "connected with each other", "connected to/with", "fixed", etc., need to be broadly understood, for example, the connection may be fixed connection, detachable connection or integrated connection; or may be mechanical connection, or electrical connection; or may be direct connection, indirect connection via an intermediation, internal communication of two elements or an interaction relationship of two elements. Those of ordinary skill in the art can understand the specific meaning of the above terms in the present invention in accordance with specific conditions.

Further, in the description of the embodiments, when the first feature is "above" or "under" the second feature, it may mean that the first feature directly contacts with the second feature, or the first feature does not directly contact with the second feature but these features contact with each other through another feature. In the description of the embodiments, when the first feature is "above" or "on" the second feature, it may mean that the first feature is directly above the second feature or above the second feature in a staggered manner, or it may simply indicate that the horizontal height of the first feature is higher than that of the second feature. When the first feature is "below" or "under" the second feature, it may mean that the first feature is directly below the second feature or below the second feature in a staggered manner, or it may simply indicate that the horizontal height of the first feature is less than that of the second feature.

Unless otherwise defined, all the terms used in the description of the embodiments (including technical terms and scientific terms) have the same meanings generally understood by those skilled in the art to which the present application pertains.

In the description of the embodiments, the description of the reference term such as "an embodiment", "some embodiments", "exemplary embodiments", "examples", "specific examples" or "some examples" means that particular features, structures, materials or features described in combination with the embodiment or example are included in at least one embodiment or example of the present invention. In the present description, schematic expression of the above terms does not necessarily refer to the same embodiment or example. Furthermore, the described particular features, structures, materials or features may be combined properly in any one or more embodiments or examples.

So far, it should be appreciated by those skilled in the art that while various exemplary embodiments of the invention have been shown and described in detail herein, many other variations or modifications which are consistent with the principles of this invention may be determined or derived directly from the disclosure of the present invention without departing from the spirit and scope of the invention. Accordingly, the scope of the invention should be understood and interpreted to cover all such other variations or modifications.

## Claims

1. A magnetic field freshness-preserving storage container, comprising:
a storage box with a storage space defined therein for holding a stored object;
two uniform magnetization plates made of a magnetically conductive material and respectively arranged corresponding to a set of opposite side walls of the storage box; and
two sets of electromagnetic assemblies, wherein each set of electromagnetic assemblies is arranged corresponding to one uniform magnetization plate and forms an electromagnetic field after being electrified, and field distribution of the electromagnetic field is changed by using the uniform magnetization plates, so that the electromagnetic field is distributed more uniformly in the storage space.

2. The magnetic field freshness-preserving storage container according to claim 1, wherein
one or more lug bosses is/are arranged on a side of each of the uniform magnetization plates facing the storage box; and
each set of electromagnetic assemblies comprises one or more electromagnetic loops, and each electromagnetic loop with an electromagnetic coil wound therein along an annular circumferential axis sleeves one of the lug bosses.

3. The magnetic field freshness-preserving storage container according to claim 2, wherein
a shape of the uniform magnetization plate is adapted to a shape of a side wall of the storage box where the uniform magnetization plate is located, and a projection of the storage space onto a plane where the uniform magnetization plate is located lies within a peripheral contour range of the uniform magnetization plate.

4. The magnetic field freshness-preserving storage container according to claim 3, wherein
each of the uniform magnetization plates is provided with one of the lug bosses, and the lug boss is located in a central area of the uniform magnetization plate, so that a center of the electromagnetic loop sleeving the lug boss is substantially opposite to a center of the uniform magnetization plate.

5. The magnetic field freshness-preserving storage container according to claim 2, wherein
the plurality of lug bosses is arranged at intervals on each of the uniform magnetization plates, and one of the electromagnetic loops sleeves each of the lug bosses.

6. The magnetic field freshness-preserving storage container according to claim 1, wherein
each of the uniform magnetization plates covers a part of a side wall of the storage box where the uniform magnetization plate is located, has a center opposite to a center of the side wall, and has a protrusion arranged on a side facing the storage box; and
each set of electromagnetic assemblies comprises an electromagnetic loop, and a part of an inner peripheral wall of the electromagnetic loop abuts against the protrusion.

7. The magnetic field freshness-preserving storage container according to any one of claims 1 to 6, further comprising:
magnetically conductive connecting bands, connected to two sides of the two uniform magnetization plates and forming an annular magnetically conductive path together with the two uniform magnetization plates outside the storage space.

8. The magnetic field freshness-preserving storage container according to any one of claims 1 to 6, further comprising:
a barrel with a forward opening, wherein
the storage box is a drawer arranged in the barrel in a drawable manner, and the two uniform magnetization plates are respectively arranged at the top and the bottom of the storage box.

9. The magnetic field freshness-preserving storage container according to claim 8, wherein
the uniform magnetization plates are arranged on an outer side or an inner side of the barrel, and a minimum spacing between the electromagnetic component and an area in which a stored object is placed inside the storage space is set to be greater than 1 mm.

10. A refrigerator, comprising:
a box body with a storage compartment defined therein; and
a magnetic field freshness-preserving storage container according to any one of claims 1 to 9, arranged inside the storage compartment.
